# EUROPEAN PATENT SPECIFICATION

(11) **EP 4 507 852 B1**
(45) Date of publication and mention of the grant of the patent: **15.04.2026**
(21) Application number: 23717919.7
(22) Date of filing: 06.04.2023
(51) Int. Cl.: B25J 5/00, B25J 9/00, B25J 9/04, B60D 1/48, B60D 1/00

(54) **COUPLING DEVICE FOR AUTONOMOUS MOBILE ROBOTS**
KUPPLUNGSVORRICHTUNG FÜR AUTONOME MOBILE ROBOTER
DISPOSITIF DE COUPLAGE POUR ROBOTS MOBILES AUTONOMES

(30) Priority: 13.04.2022 IT 202200007331
(43) Date of publication of application: 19.02.2025
(73) Proprietor: Eureka System S.r.l., 31020 Villorba (IT)
(72) Inventor: CONTO', Eros, 31038 PAESE (IT)
(74) Representative: Morabito, Sara
(86) International application number: PCT/EP2023/059273
(87) International publication number: WO 2023/198631

(56) References cited:
- WO-A1-2019/063816
- WO-A1-2021/151786
- US-A1- 2018 281 178
- US-A1- 2022 080 793

## Description

The present invention relates to a coupling device for autonomous mobile robots.

The documents WO 2019/063816 A1, WO 2021/151786 A1, US 2018/281178 A1 and US 2022/080793 A1 form part of the prior art.

Nowadays robots are known, also called "AMRs" or "Autonomous Mobile Robots", which are used for moving various products and/or semifinished products in industrial environments.

Conventional AMRs are provided with wheels driven by navigation systems which, using preset maps and dedicated software, enable for example the end-of-line movement of various products.

They have excellent positioning capacity and great precision and rapidity of movements, all of which enable them to move around safely and quickly in production environments.

AMRs are also known that are capable of towing a load or a cart which is automatically hitched to them, creating an articulated system; such solution has drawbacks however, in that the combination of the AMR and the cart extends lengthwise which limits the capacity for changing direction in the event it needs to follow a nonlinear path.

AMRs are also known that are positioned below a cart and are coupled to the cart using, for the connection, actuators in the form of self-centering conical pins that progressively protrude upward and enter adapted holes in the bottom of the cart.

This solution also presents drawbacks: there is in fact the risk that the pins (of which there are a minimum of two if an optimal AMR/cart engagement is to be obtained) do not enter the holes correctly, this risk deriving from the high degree of precision of positioning required on the part of the AMR in order to align the pins with the holes of the cart; accuracy and repeatability of positioning for an AMR robot defined as "precise" is of the order of +/- 10 mm.

There is also the possibility that the AMR and the cart can be arranged on different planes owing to slight unevenness in the floor; this can cause the pin to stick, with consequent lifting and probable overturning of the cart.

Furthermore, on floors with slight unevenness, the AMR and the cart will move on planes with different inclinations, thus making it necessary to have a minimum degree of freedom between them, while the conical pin greatly limits such freedom.

Finally, in the event of an anomaly with the AMR, the cart must be brought to its destination manually, thus making it necessary to disengage them with a manual maneuver; the pin, which is actuated electrically, must therefore have a mechanism that allows it to be lowered manually, which increases manufacturing costs and running costs.

The aim of the present invention is to solve the above mentioned technical problems, eliminating the drawbacks in the cited known art, by providing a coupling device for autonomous mobile robots that, applied to an AMR, enables a rapid, effective, precise and fast mating to/separation from a cart that is adapted to support suitable devices to be moved.

Within the above aim, an object of the invention is to provide a coupling device for autonomous mobile robots that, applied to an AMR, makes it possible to effectively move a cart even in the presence of nonlinear paths.

Another object of the invention is to provide a coupling device for autonomous mobile robots that is structurally simple and of low cost and which can be made with the usual conventional plants.

This aim and these and other objects which will become better apparent hereinafter are achieved by a coupling device for autonomous mobile robots, characterized in that it has two arms, which are configured to be pivoted at a first end to said robot and can splay on a horizontal plane using electrically-actuated linear actuators, said two arms being provided at a second end with conical cutouts which are adapted to intercept respective pins which can be removably inserted in seats provided on the bottom of an overlying cart which is configured to move on idle wheels 27.

Further characteristics and advantages of the invention will become better apparent from the detailed description of a particular but not exclusive embodiment thereof, illustrated by way of non-limiting example in the accompanying drawings, wherein:

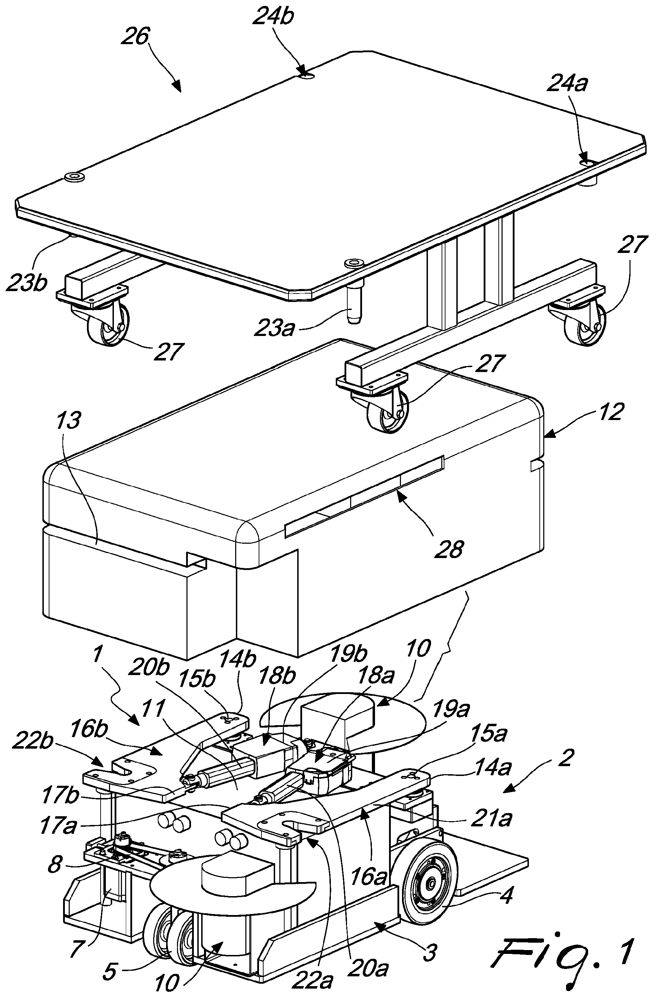

Figure 1 is an exploded view of the coupling device according to the present invention;

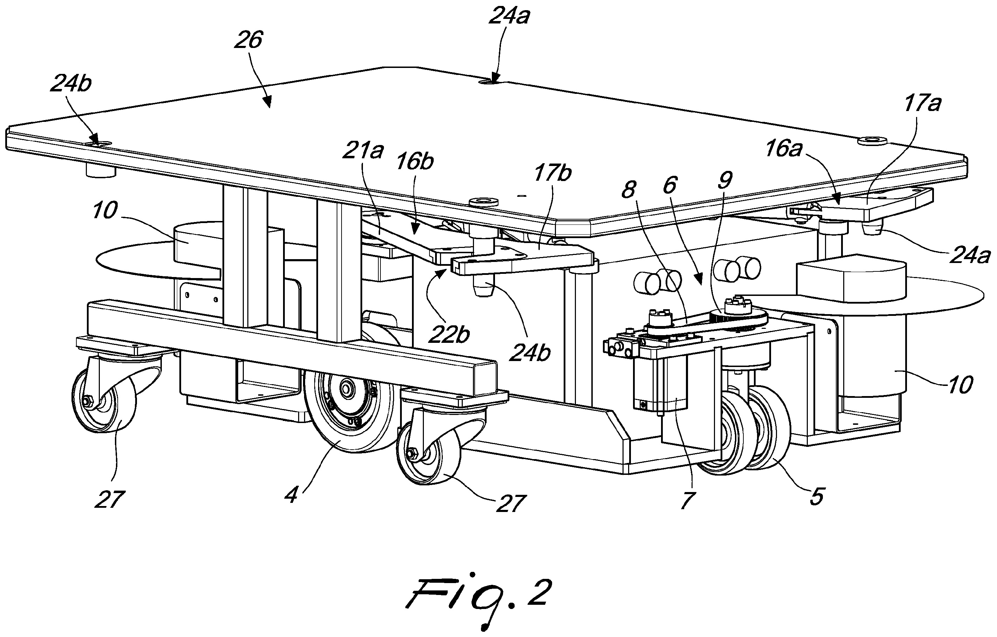

Figure 2 is a perspective view of the coupling device in the condition of engagement with the cart;

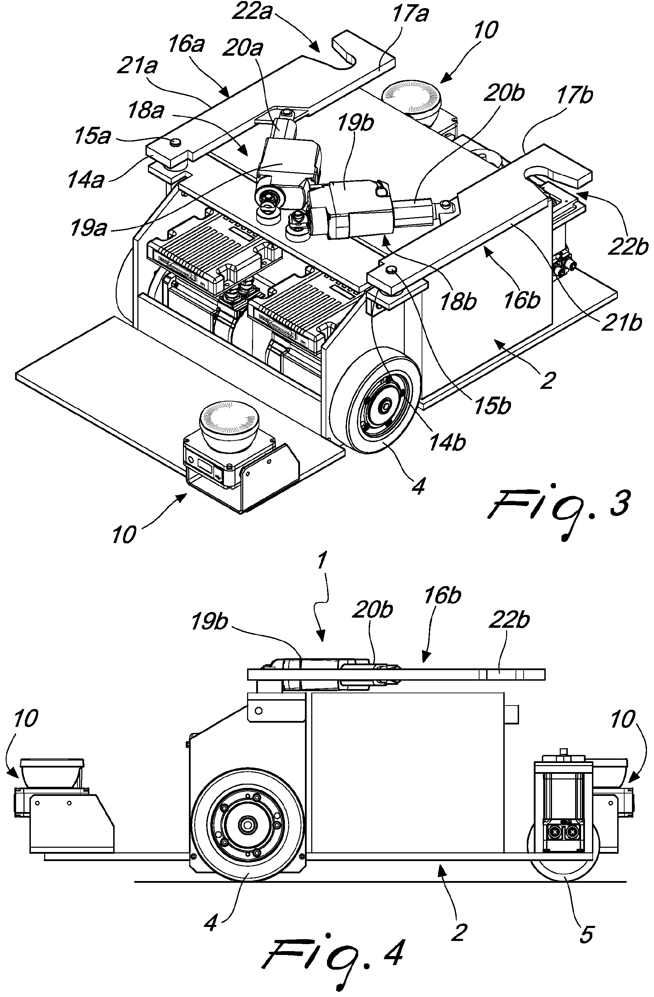

Figure 3 is a perspective view of the coupling device without the cover;
Figure 4 is a side view of the coupling device without the cover;

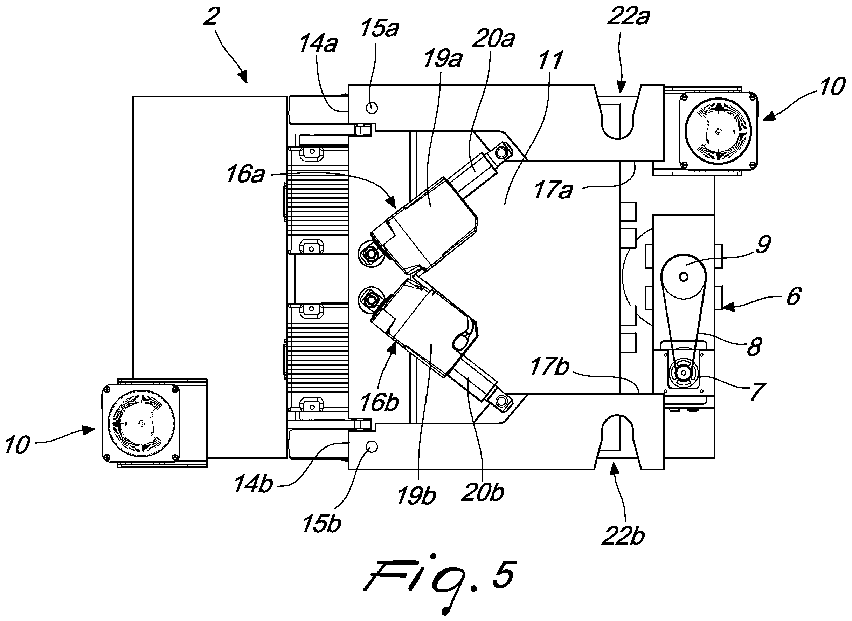

Figure 5 is a view from above of the coupling device without the cover in the condition of disengagement from the cart;

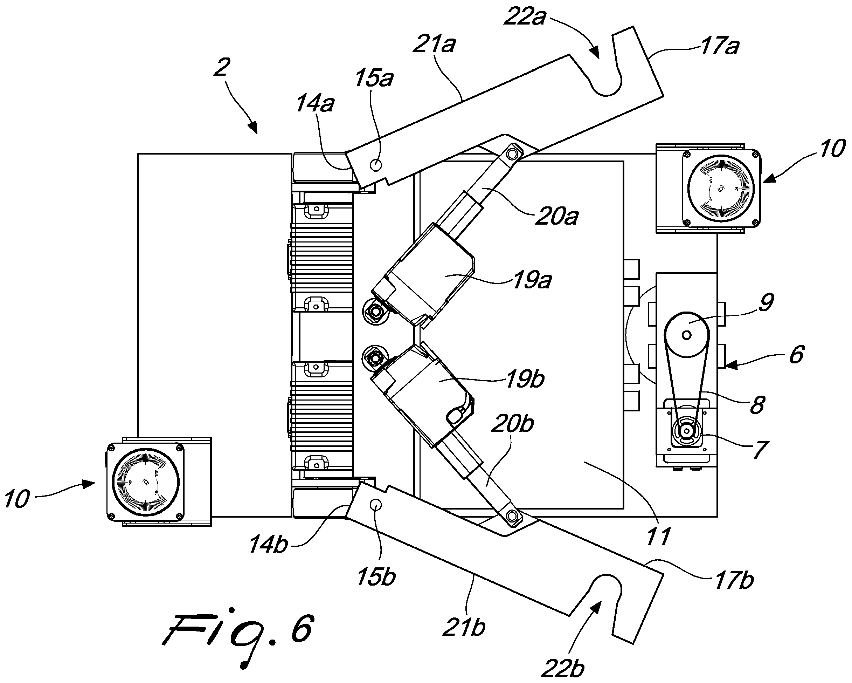

Figure 6 is a view from above of the coupling device without the cover in the condition of engagement with the cart.

In the embodiments that follow, individual characteristics, given in relation to specific embodiments, may actually be interchanged with other, different characteristics that exist in other embodiments.

With reference to the figures, the reference numeral 1 generally designates a coupling device for autonomous mobile robots 2 of the type that comprises a frame 3 for supporting drive wheels 4 and swiveling wheels 5 which are coupled to adapted activation means 6, such as a motor 7 connected by a belt 8 to a pinion 9 adapted to drive the rotation of said swiveling wheels 5.

The frame 2 is further associated, in the front and rear zones, with sensors 10 which are adapted to generate a proximity scan for guiding the robot.

The frame 2 has a substantially parallelepiped shape structure, so as to define a substantially planar upper surface 11, and a protective cover 12 can be superimposed thereon, adapted slots 13 being provided on said cover for the sensors 10.

At the longitudinal sides of the upper surface 11, two arms 16a, 16b are pivoted to a first end 14a, 14b by means of adapted pivots 15a, 15b, and are thus arranged on a horizontal plane and have a length substantially equal to that of the upper surface 11 and a width such as to allow them to splay starting from an inactive condition in which they rest, lengthwise, in the perimeter defined by the upper surface 11.

Each arm 16a, 16b is, in plan view, substantially L-shaped in structure so as to define a second end 17a, 17b, said second ends being arranged mutually opposite and oriented toward the longitudinal perimetric edge of the upper surface 11.

Adapted openings 28 are provided on the cover 12 and are adapted to allow the exit, through them, of the second ends 17a, 17b in the splayed condition for the arms 16a, 16b.

The splaying of the arms 16a, 16b is allowed by the electrically-controlled linear actuators 18a, 18b, the body 19a, 19b of which is pivoted to the upper surface 11 and the stem 20a, 20b of which is pivoted at the second ends 17a, 17b.

At the perimetric edge 21a, 21b of the arms 16a, 16b opposite to the second end 17a, 17b, there are conical cutouts 22a, 22b which are adapted to intercept respective pins 23a, 23b which can be removably inserted in adapted seats 24a, 24b provided on the bottom 25 of an overlying cart 26 which can move on idle wheels 27.

Thus it has been found that the invention fully achieves the intended aim and objects, a coupling device having been obtained that, applied to an AMR, enables a rapid, effective, precise and fast mating to/separation from a cart that is adapted to support suitable devices to be moved.

In fact the two arms 16a, 16b pivoted to the upper surface 11 are splayed by the electrically-controlled linear actuators 18a, 18b while the conical cutouts 22a, 22b intercept respectively the two pins 23a, 23b on the bottom 25 of the cart 26, in so doing automatically centering it; opening the two arms 16a, 16b continues up until complete engagement.

The coupling device 1 allows the pins 23a, 23b to slide vertically and therefore offers the cart 26 a degree of freedom on the vertical axis.

The pins 23a, 23b are nail-shaped and are inserted into the seats 24a, 24b present in the cart 26 and are directed with the stem downward; their removal occurs simply by extracting the pin 26 upward, in so doing rapidly decoupling the AMR from the cart.

Advantageously the conical cutouts 22a, 22b and the pins 23a, 23b will be coated in self-lubricating plastic material in order to decrease friction.

The coupling device applied to an AMR furthermore makes it possible to effectively move a cart even in the presence of nonlinear paths.

The coupling device 1 can be of the type that can be overturned with respect to the plane of arrangement of the upper surface 11 the two arms 16a, 16b being associated with a plate which in turn is associated, in a manner that allows its overturning, with the upper surface 11 in order to allow the entry of a battery into an adapted and underlying compartment.

Naturally the materials used as well as the dimensions of the individual components of the device according to the invention may be more relevant according to specific requirements.

The characteristics indicated above as advantageous, convenient or the like, may also be missing or be substituted by equivalent characteristics.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A coupling device (1) for autonomous mobile robots (2), **characterized in that** it has two arms (16a, 16b), which are configured to be pivoted at a first end (14a, 14b) to said robot (2) and can splay on a horizontal plane using electrically-actuated linear actuators (18a, 18b), said two arms (16a, 16b) being provided at a second end (17a, 17b) with conical cutouts (22a, 22b) which are adapted to intercept respective pins (23a, 23b) which can be removably inserted in seats (24a, 24b) provided on the bottom (25) of an overlying cart (26) which is configured to move on idle wheels (27).

2. The device (1) according to claim 1, **characterized in that** it comprises a frame (2) which has a substantially parallelepiped shape structure so as to define a substantially planar upper surface (11), a protective cover (12) being configured to be superimposed thereon, slots (13) being provided thereon for sensors (10) adapted to generate a proximity scan.

3. The device (1) according to claims 1 and 2, **characterized in that** said two arms (16a, 16b) are pivoted, at the longitudinal sides of said upper surface (11), to said first end (14a, 14b) by means of pivots (15a, 15b), and are thus arranged on a horizontal plane and have a length substantially equal to that of said upper surface (11) and a width such as to allow them to splay starting from an inactive condition in which they rest, lengthwise, in the perimeter defined by said upper surface (11).

4. The device (1) according to one or more of the preceding claims, **characterized in that** each one of said arms (16a, 16b) is, in plan view, substantially L-shaped in structure, so as to define said second ends (17a, 17b), which are arranged mutually opposite and oriented toward the longitudinal perimetric edge of said upper surface (11).

5. The device (1) according to one or more of the preceding claims, **characterized in that** said protective cover (12) is configured to be associated with said autonomous mobile robot (2) and openings (28) are provided thereon which are adapted to allow the exit, through them, of said second ends (17a, 17b) in the splayed condition for said arms (16a, 16b).

6. The device (1) according to one or more of the preceding claims, **characterized in that** the splaying of said arms (16a, 16b) is allowed by said electrically-controlled linear actuators (18a, 18b), the body (19a, 19b) of which is pivoted to said upper surface (11) and the stem (20a, 20b) of which is pivoted at said second ends (17a, 17b).

7. The device (1) according to one or more of the preceding claims, **characterized in that** said conical cutouts (22a, 22b) are provided at the perimetric edge (21a, 21b) of said arms (16a, 16b) that is opposite to said second ends (17a, 17b), and are adapted to intercept said pins (23a, 23b) which are configured to be removably inserted into seats (24a, 24b) provided on the bottom (25) of said, overlying, cart (26).

8. The device (1) according to one or more of the preceding claims, **characterized in that** said pins (23a, 23b) are nail-shaped and are directed with their stem downward; their removal occurring by extracting them from said seats (24a, 24b) provided on said bottom (25).

9. The device (1) according to one or more of the preceding claims, **characterized in that** it is configured to be overturned with respect to the plane of arrangement of said upper surface (11), said two arms (16a, 16b) being associated with a plate which in turn is associated, in a manner that allows its overturning, with said upper surface (11) in order to allow the entry of a battery into an underlying compartment.

## Patentansprüche

1. Kupplungsvorrichtung (1) für autonome mobile Roboter (2), **dadurch gekennzeichnet, dass** sie zwei Arme (16a, 16b) aufweist, die eingerichtet sind, um an einem ersten Ende (14a, 14b) am Roboter (2) schwenkbar zu sein und um sich auf einer horizontalen Ebene unter Verwendung elektrisch betätigter Linearantriebe (18a, 18b) auszubreiten, wobei die beiden Arme (16a, 16b) an einem zweiten Ende (17a, 17b) mit konischen Ausschnitten (22a, 22b) versehen sind, die angepasst sind, um entsprechende Stifte (23a, 23b) aufzunehmen, die entfernbar in Aufnahmen (24a, 24b) eingesetzt werden können, die an der Unterseite (25) eines darüberliegenden Wagens (26) vorgesehen sind, der eingerichtet ist, um sich auf Leerlaufrädern (27) zu bewegen.

2. Vorrichtung (1) nach Anspruch 1, **dadurch gekennzeichnet, dass** sie einen Rahmen (2) aufweist, der eine im Wesentlichen quaderförmige Struktur aufweist, um eine im Wesentlichen ebene obere Fläche (11) zu bilden, wobei eine Schutzabdeckung (12) eingerichtet ist, um darauf aufgesetzt zu werden, und Schlitze (13) für Sensoren (10) darauf vorgesehen sind, die angepasst sind, um einen Näherungsscan zu erzeugen.

3. Vorrichtung (1) nach den Ansprüchen 1 und 2, **dadurch gekennzeichnet, dass** die beiden Arme (16a, 16b) an den Längsseiten der oberen Fläche (11) am ersten Ende (14a, 14b) durch Drehzapfen (15a, 15b) schwenkbar befestigt sind und somit auf einer horizontalen Ebene angeordnet sind und eine Länge, die im Wesentlichen der der oberen Fläche (11) entspricht, und eine Breite aufweisen, um zu ermöglichen, sich aus einem inaktiven Zustand, in dem sie längsgerichtet im durch die obere Fläche (11) gebildeten Umfang liegen, auszubreiten.

4. Vorrichtung (1) nach einem oder mehreren der vorhergehenden Ansprüche, **dadurch gekennzeichnet, dass** jeder der Arme (16a, 16b) in der Draufsicht eine im Wesentlichen L-förmige Struktur aufweist, um die zweiten Enden (17a, 17b) zu bilden, die einander gegenüberliegend angeordnet und in Richtung der Längskante der oberen Fläche (11) ausgerichtet sind.

5. Vorrichtung (1) nach einem oder mehreren der vorhergehenden Ansprüche, **dadurch gekennzeichnet, dass** die Schutzabdeckung (12) eingerichtet ist, um mit dem autonomen mobilen Roboter (2) verbunden zu werden, und dass darauf Öffnungen (28) vorgesehen sind, die angepasst sind, um den Austritt der zweiten Enden (17a, 17b) im ausgebreiteten Zustand der Arme (16a, 16b) durch sie hindurch zu ermöglichen.

6. Vorrichtung (1) nach einem oder mehreren der vorhergehenden Ansprüche, **dadurch gekennzeichnet, dass** das Ausbreiten der Arme (16a, 16b) durch die elektrisch gesteuerten Linearantriebe (18a, 18b) ermöglicht wird, deren Körper (19a, 19b) an der oberen Fläche (11) und deren Schaft (20a, 20b) an den zweiten Enden (17a, 17b) schwenkbar ist.

7. Vorrichtung (1) nach einem oder mehreren der vorhergehenden Ansprüche, **dadurch gekennzeichnet, dass** die konischen Ausschnitte (22a, 22b) an der den zweiten Enden (17a, 17b) gegenüberliegenden Umfangskante (21a, 21b) der Arme (16a, 16b) vorgesehen sind, die angepasst sind, um die Stifte (23a, 23b) aufzunehmen, die eingerichtet sind, um entfernbar in die Aufnahmen (24a, 24b) eingesetzt zu werden, die an der Unterseite (25) des darüber liegenden Wagens (26) vorgesehen sind.

8. Vorrichtung (1) nach einem oder mehreren der vorhergehenden Ansprüche, **dadurch gekennzeichnet, dass** die Stifte (23a, 23b) nagelförmig sind und mit ihrem Schaft nach unten gerichtet sind; wobei ihre Entfernung durch Herausziehen aus den an der Unterseite (25) vorgesehenen Aufnahmen (24a, 24b) erfolgt.

9. Vorrichtung (1) nach einem oder mehreren der vorhergehenden Ansprüche, **dadurch gekennzeichnet, dass** sie eingerichtet ist, um in Bezug auf die Anordnungsebene der oberen Fläche (11) umgeklappt zu werden, wobei die beiden Arme (16a, 16b) mit einer Platte verbunden sind, die wiederum in einer Weise, die ihr Umklappen ermöglicht, mit der oberen Fläche (11) verbunden ist, um das Einsetzen einer Batterie in ein darunterliegendes Fach zu ermöglichen.

## Revendications

1. Dispositif d'accouplement (1) pour robots mobiles autonomes (2), **caractérisé en ce qu'**il comporte deux bras (16a, 16b) configurés pour être pivotés au niveau d'une première extrémité (14a, 14b) sur ledit robot (2) et pouvant s'écarter sur un plan horizontal à l'aide d'actionneurs linéaires actionnés électriquement (18a, 18b), lesdits deux bras (16a, 16b) étant pourvus au niveau d'une seconde extrémité (17a, 17b) de découpes coniques (22a, 22b) adaptées pour intercepter des broches (23a, 23b) respectives qui peuvent être insérées de manière amovible dans des sièges (24a, 24b) prévus sur le fond (25) d'un chariot sus-jacent (26) configuré pour se déplacer sur des roues folles (27).

2. Dispositif (1) selon la revendication 1, **caractérisé en ce qu'**il comprend un cadre (2) qui a une structure sensiblement parallélépipédique de manière à définir une surface supérieure sensiblement plane (11), un couvercle de protection (12) étant configuré pour être superposé sur celle-ci, des fentes (13) étant prévues sur celui-ci pour des capteurs (10) adaptés pour générer un balayage de proximité.

3. Dispositif (1) selon les revendications 1 et 2, **caractérisé en ce que** lesdits deux bras (16a, 16b) sont pivotés, sur les côtés longitudinaux de ladite surface supérieure (11), à ladite première extrémité (14a, 14b) au moyen de pivots (15a, 15b), et sont ainsi disposés sur un plan horizontal et ont une longueur sensiblement égale à celle de ladite surface supérieure (11) et une largeur telle qu'elle leur permet de s'écarter à partir d'un état inactif dans lequel ils reposent, dans le sens de la longueur, dans le périmètre défini par ladite surface supérieure (11).

4. Dispositif (1) selon l'une ou plusieurs des revendications précédentes, **caractérisé en ce que** chacun desdits bras (16a, 16b) a, en vue de dessus, une structure sensiblement en forme de L, de manière à définir lesdites secondes extrémités (17a, 17b), qui sont disposées mutuellement à l'opposé et orientées vers le bord périmétrique longitudinal de ladite surface supérieure (11).

5. Dispositif (1) selon l'une ou plusieurs des revendications précédentes, **caractérisé en ce que** ledit couvercle de protection (12) est configuré pour être associé audit robot mobile autonome (2) et que des ouvertures (28) y sont prévues qui sont adaptées pour permettre la sortie, à travers elles, desdites secondes extrémités (17a, 17b) à l'état écarté pour lesdits bras (16a, 16b).

6. Dispositif (1) selon l'une ou plusieurs des revendications précédentes, **caractérisé en ce que** l'écartement desdits bras (16a, 16b) est permis par lesdits actionneurs linéaires à commande électrique (18a, 18b) dont le corps (19a, 19b) est pivoté sur ladite surface supérieure (11) et dont la tige (20a, 20b) est pivotée auxdites secondes extrémités (17a, 17b).

7. Dispositif (1) selon l'une ou plusieurs des revendications précédentes, **caractérisé en ce que** lesdites découpes coniques (22a, 22b) sont prévues sur le bord périmétrique (21a, 21b) desdits bras (16a, 16b) qui est opposé auxdites secondes extrémités (17a, 17b), et sont adaptées pour intercepter lesdites broches (23a, 23b) configurées pour être insérées de manière amovible dans des sièges (24a, 24b) prévus sur le fond (25) dudit chariot sus-jacent (26).

8. Dispositif (1) selon l'une ou plusieurs des revendications précédentes, **caractérisé en ce que** lesdites broches (23a, 23b) sont en forme de clou et sont dirigées avec leur tige vers le bas ; leur retrait s'effectue en les extrayant desdits sièges (24a, 24b) prévus sur ledit fond (25).

9. Dispositif (1) selon l'une ou plusieurs des revendications précédentes, **caractérisé en ce qu'**il est configuré pour être basculé par rapport au plan de disposition de ladite surface supérieure (11), lesdits deux bras (16a, 16b) étant associés à une plaque qui, à son tour, est associée, de manière à permettre son basculement, à ladite surface supérieure (11) afin de permettre l'entrée d'une batterie dans un compartiment sous-jacent.
